# NOUVEAU FASCICULE DE BREVET EUROPEEN

(11) **EP 1 527 018 B2**
(45) Date de publication et mention de la décision concernant l'opposition: **27.10.2021**
(45) Mention de la délivrance du brevet: 18.11.2015
(21) Numéro de dépôt: 03761645.5
(22) Date de dépôt: 26.06.2003
(51) Int. Cl.: C01G 25/02, C04B 35/48, B01D 53/94, B01J 23/10, B01J 21/00

(54) **COMPOSITION À BASE D'OXYDE DE ZIRCONIUM ET D'OXYDES DE CERIUM, DE LANTHANE ET D'UNE AUTRE TERRE RARE, SON PROCÉDÉ DE PRÉPARATION ET SON UTILISATION COMME CATALYSEUR**
ZUSAMMENSETZUNG AUS ZIRKONOXID UND OXIDEN DES CERS, LANTHANS UND ANDERER SELTENEN ERDEN, SOWIE EIN VERFAHREN ZUR HERSTELLUNG
COMPOSITION BASED ON ZIRCONIUM OXIDE AND OXIDES OF CERIUM, LANTHANUM AND OF ANOTHER RARE EARTH, A METHOD FOR PREPARING SAME AND USE THEREOF AS CATALYST

(30) Priorité: 26.06.2002 FR 0207926
(43) Date de publication de la demande: 04.05.2005
(60) Demande divisionnaire: 15191869.5
(73) Titulaire: Rhodia Operations, 93300 Aubervilliers (FR)
(72) Inventeur: HEDOUIN, Catherine, F-60270 Gouvieux (FR)
(74) Mandataire: Senninger, Thierry
(86) Numéro de dépôt international: PCT/FR2003/001972
(87) Numéro de publication internationale: WO 2004/002893

(56) Documents cités:
- EP-A- 0 955 267
- EP-A- 1 052 008
- EP-A- 1 053 779
- EP-A- 1 174 174
- WO-A-97/43214
- WO-A-03/020643

## Description

La présente invention concerne une composition à base d'oxyde de zirconium et d'oxydes de cérium, de lanthane et d'une autre terre rare, son procédé de préparation et son utilisation comme catalyseur.

On utilise à l'heure actuelle pour le traitement des gaz d'échappement des moteurs à combustion interne (catalyse postcombustion automobile) des catalyseurs dits multifonctionnels. Par multifonctionnels, on entend les catalyseurs capables d'opérer non seulement l'oxydation en particulier du monoxyde de carbone et des hydrocarbures présents dans les gaz d'échappement mais également la réduction en particulier des oxydes d'azote également présents dans ces gaz (catalyseurs "trois voies"). L'oxyde de zirconium et l'oxyde de cérium apparaissent aujourd'hui comme deux constituants particulièrement importants et intéressants pour ce type de catalyseurs. Pour être efficaces, ces catalyseurs doivent présenter une surface spécifique importante même à température élevée.

Il existe un besoin en catalyseurs susceptibles de pouvoir être utilisés à des températures de plus en plus élevées et, pour cela, présentant une grande stabilité de leur surface spécifique.

L'objet de l'invention est donc la mise au point d'une composition catalytique pouvant répondre à ce besoin.

Dans ce but, la composition de l'invention est telle que définie par les revendications.

L'invention concerne aussi un procédé de préparation de la composition précédente et ce procédé est caractérisé en ce qu'il comprend les étapes suivantes:
- on forme un mélange comprenant des composés de cérium, de lanthane et de la terre rare précitée et un sol d'un composé de zirconium;
- on met en présence ledit mélange avec une solution d'un composé basique ce par quoi on obtient un précipité;
- on chauffe en milieu aqueux ledit précipité à une température d'au moins 100°C ;
- on calcine le précipité ainsi obtenu.

Comme cela a été mentionné plus haut, la composition de l'invention présente des valeurs de surface spécifiques particulièrement élevées à une température de 1150°C et à une température de 1000°C.

D'autres caractéristiques, détails et avantages de l'invention apparaîtront encore plus complètement à la lecture de la description qui va suivre, ainsi que d'un exemple concret mais non limitatif destiné à l'illustrer.

Pour la suite de la description, on entend par surface spécifique, la surface spécifique B.E.T. déterminée par adsorption d'azote conformément à la norme ASTM D 3663-78 établie à partir de la méthode BRUNAUER - EMMETT- TELLER décrite dans le périodique "The Journal of the American Chemical Society, 60, 309 (1938)".

En outre, les calcinations à l'issue desquelles sont données les valeurs de surface sont des calcinations sous air.

Par terre rare on entend les éléments du groupe constitué par l'yttrium et les éléments de la classification périodique de numéro atomique compris inclusivement entre 57 et 71.

Les compositions de l'invention sont à base d'oxyde de zirconium et elles comprennent en outre des oxydes de trois autres éléments. Ces éléments sont le cérium, le lanthane et une troisième terre rare qui est différente du cérium et du lanthane. Cette troisième terre rare peut être tout particulièrement le néodyme.

Les compositions de l'invention se caractérisent en outre par leur surface spécifique après calcination à des températures élevées. Ainsi, après calcination 6 heures à 1150°C, cette surface spécifique est comprise entre 10m²/g et 15m²/g.

Cette surface reste à des valeurs encore significatives après calcination 6 heures à 1200°C, à savoir au moins 3m²/g.

Selon les modes de réalisation, les compositions de l'invention peuvent aussi présenter des surfaces élevées à 900°C après 6 heures de calcination, par exemple d'au moins 50m²/g, plus particulièrement d'au moins 70m²/g et encore plus particulièrement d'au moins 75m²/g. A 1000°C, après 6 heures de calcination, cette surface est d'au moins 40m²/g, plus particulièrement d'au moins 55m²/g.

En outre, après calcination 6 heures à 1100°C, les compositions de l'invention peuvent éventuellement, selon les modes de réalisation, présenter une surface spécifique d'au moins 20m²/g.

Selon un mode de réalisation particulier, les compositions de l'invention peuvent se présenter sous la forme d'une solution solide pure des oxydes de cérium, de lanthane et de l'autre terre rare dans l'oxyde de zirconium. On entend par là que le cérium, le lanthane et l'autre terre rare sont présents totalement en solution solide dans le zirconium. Les spectres en diffraction RX de ces compositions révèlent en particulier, au sein de ces dernières, l'existence d'une phase unique clairement identifiable et correspondant à celle d'un oxyde de zirconium cristallisé dans le système cubique ou quadratique, traduisant ainsi l'incorporation du cérium, du lanthane et de l'autre terre rare dans le réseau cristallin de l'oxyde de zirconium, et donc l'obtention d'une solution solide vraie.

Dans ce mode de réalisation la phase solution solide est stable. On entend par là qu'à l'issue des calcinations à 900°C mais aussi à 1000°C sur les durées précitées que les compositions de l'invention se présentent toujours sous cette phase unique. Par ailleurs, et selon un mode de réalisation plus particulier, elles peuvent conserver aussi cette structure de solution solide pure même après calcination 6 heures à 1100°C. En d'autres termes, on n'observe pas de démixtion dans la gamme de températures de 900°C à 1100°C.

Les teneurs des différents éléments dans les compositions peuvent varier. Ces teneurs sont exprimées ici et pour l'ensemble de la description en poids d'oxyde (ZrO₂, CeO₂, TR₂O₃, TR désignant le lanthane et l'autre terre rare). Généralement, la teneur en zirconium est d'au moins 50%, plus particulièrement d'au moins 60% et encore plus particulièrement d'au moins 70%. Pour le cérium, cette teneur est généralement inférieure 50%, plus particulièrement d'au plus 40% et encore plus particulièrement d'au plus 25%. La teneur en lanthane est habituellement d'au plus 5% et elle peut être plus particulièrement comprise entre 1% et 3%. Enfin, cette teneur peut être d'au plus 15% pour la terre rare et elle peut être plus particulièrement comprise entre 3% et 10%. Dans le cas des compositions sous forme de solutions solides, les teneurs limites supérieures en lanthane et troisième terre rare ne sont en fait imposées que par la seule limite de solubilité de ces espèces dans l'oxyde de zirconium.

Une autre caractéristique des compositions de l'invention est qu'elles sont exemptes de soufre. On entend par là que la teneur en soufre est inférieure à 200ppm, de préférence inférieure à 100ppm. Cette teneur est exprimée en poids de sulfate (SO₄) par rapport à l'ensemble de la composition.

Le procédé de préparation des compositions de l'invention va maintenant être décrit.

La première étape de ce procédé consiste à former un mélange comprenant des composés de cérium, de lanthane et de la troisième terre rare d'une part et un sol d'un composé de zirconium d'autre part.

Ce mélange se fait habituellement en milieu aqueux.

Par sol on désigne tout système constitué de fines particules solides de dimensions colloïdales, c'est à dire des dimensions comprises entre environ 1 nm et environ 500nm, à base d'un composé de zirconium, ce composé étant généralement un oxyde et/ou un oxyde hydraté de zirconium, en suspension dans une phase liquide aqueuse, lesdites particules pouvant en outre, éventuellement, contenir des quantités résiduelles d'ions liés ou adsorbés tels que par exemple des nitrates, des acétates, des chlorures ou des ammoniums. On notera que dans un tel sol, le zirconium peut se trouver soit totalement sous la forme de colloïdes, soit simultanément sous la forme d'ions et sous la forme de colloïdes.

Le sol de départ peut être obtenu notamment par traitement thermique ou hydrolyse à chaud d'une solution d'oxychlorure de zirconium (ZrOCl₂). Ce traitement se fait généralement à une température d'au moins 80°C et qui peut être comprise entre environ 100°C et 300°C, et de préférence entre 120°C et 200°C, la concentration de la solution d'oxychlorure de zirconium étant de préférence comprise entre 0,1 et 3 moles/l, plus particulièrement entre 0,5 et 2 moles/l exprimée en ZrO₂.

Le sol de zirconium peut aussi être obtenu par attaque d'un hydroxyde ou d'un carbonate de zirconium par de l'acide nitrique. Pour obtenir un sol au sens donné plus haut, cette attaque doit être conduite dans des conditions spécifiques. Ainsi, le rapport molaire NO₃⁻/Zr doit être compris entre environ 1,7 et environ 2,3 dans le cas d'un hydroxyde et environ 1,7 et environ 2 dans le cas d'un carbonate. Au-delà des valeurs maximales de ce rapport, il y a un risque de ne pas obtenir des colloïdes. En deçà de la valeur minimale de ce même rapport, les propriétés de stabilité de surface des compositions risquent de ne pas être obtenues.

On peut utiliser notamment des sols de zirconium présentant une taille moyenne de colloïdes comprise entre 5 nm et 500 nm, et avantageusement comprise entre 10 et 200 nm (La taille ou diamètre hydrodynamique moyen est tel que déterminé par diffusion quasi-élastique de la lumière selon la méthode décrite par Michael L. Mc CONNELL dans la revue Analytical Chemistry 53, n° 8, 1007 A, 1981).

A titre de composés de cérium, de lanthane et de terre rare utilisables dans le procédé de l'invention, on peut par exemple citer les sels d'acides inorganiques ou organiques, notamment du type sulfate, nitrate, chlorure ou acétate. On peut utiliser plus particulièrement les sels de cérium IV tels que le nitrate cérique ou le nitrate céri-ammoniacal. On notera que les nitrates conviennent particulièrement bien d'une manière générale.

Les quantités de zirconium, de cérium, de lanthane et de terre rare dans le mélange doivent correspondre aux proportions stoechiométriques requises pour l'obtention de la composition finale désirée.

La deuxième étape du procédé consiste à mettre en présence le mélange obtenu dans la première étape avec une solution d'un composé basique. On obtient un précipité.

Comme composé basique on peut mentionner les produits du type hydroxyde ou carbonate. On peut citer les hydroxydes d'alcalins ou d'alcalinoterreux. On peut aussi utiliser les amines secondaires, tertiaires ou quaternaires. Toutefois, les amines et l'ammoniaque peuvent être préférés dans la mesure où ils diminuent les risques de pollution par les cations alcalins ou alcalino terreux. On peut aussi mentionner l'urée.

La manière d'effectuer la mise en présence du mélange et de la solution, c'est à dire l'ordre d'introduction de ceux-ci n'est pas critique. Toutefois, cette mise en présence peut se faire en introduisant le mélange dans la solution du composé basique. Cette variante est préférable pour obtenir les compositions sous forme de solutions solides.

On notera enfin que lorsque le mélange de départ contient un composé du cérium dans lequel celui-ci est sous forme de Ce III, il est préférable de faire intervenir dans le cours du procédé un agent oxydant, par exemple de l'eau oxygénée. Cet agent oxydant peut être utilisé en étant ajouté au milieu réactionnel lors de cette deuxième étape.

La mise en présence ou la réaction entre le mélange et la solution, notamment l'addition du mélange dans la solution du composé basique, peut être effectuée en une seule fois, graduellement ou en continu, et elle est de préférence réalisée sous agitation. Elle est de préférence conduite à température ambiante. Enfin, la réaction est réalisée dans des conditions telles que le pH du milieu formé soit d'au moins 7, plus particulièrement d'au moins 9.

L'étape suivante du procédé est l'étape de chauffage du précipité en milieu aqueux.

Ce chauffage peut être réalisé directement sur le milieu réactionnel obtenu après réaction avec le composé basique ou sur une suspension obtenue après séparation du précipité du milieu réactionnel, lavage éventuel et remise dans l'eau du précipité. La température à laquelle est chauffé le milieu est d'au moins 100°C. Le milieu est maintenu ainsi à une température constante pendant une durée qui est habituellement d'au moins 30 minutes et plus particulièrement d'au moins 1 heure. Le chauffage peut se faire à la pression atmosphérique ou éventuellement à une pression plus élevée.

Le milieu soumis au chauffage est de préférence à pH basique.

Il est possible de faire plusieurs chauffages. Ainsi, on peut remettre en suspension dans l'eau, le précipité obtenu après l'étape de chauffage et éventuellement un lavage puis effectuer un autre chauffage du milieu ainsi obtenu. Cet autre chauffage se fait dans les mêmes conditions que celles qui ont été décrites pour le premier.

Dans une dernière étape du procédé selon l'invention, le précipité récupéré, après éventuellement lavage et/ou séchage, est calciné. Cette calcination permet de développer la cristallinité du produit formé, et elle peut être également ajustée et/ou choisie en fonction de la température d'utilisation ultérieure réservée à la composition selon l'invention, et ceci en tenant compte du fait que la surface spécifique du produit est d'autant plus faible que la température de calcination mise en oeuvre est plus élevée. Une telle calcination est généralement opérée sous air, mais une calcination menée par exemple sous gaz inerte ou sous atmosphère contrôlée (oxydante ou réductrice) n'est bien évidemment pas exclue.

En pratique, on limite généralement la température de calcination à un intervalle de valeurs comprises entre 300 et 1000°C.

Les compositions de l'invention telles que décrites plus haut ou telles qu'obtenues dans le procédé étudié précédemment se présentent sous forme de poudres mais elles peuvent éventuellement être mises en forme pour se présenter sous forme de granulés, billes, cylindres ou nids d'abeille de dimensions variables.

L'invention concerne aussi des systèmes catalytiques comprenant les compositions de l'invention. Pour de tels systèmes, ces compositions peuvent ainsi être appliquées sur tout support utilisé habituellement dans le domaine de la catalyse, c'est à dire notamment des supports inertes thermiquement. Ce support peut être choisi parmi l'alumine, l'oxyde de titane, l'oxyde de cérium, l'oxyde de zirconium, la silice, les spinelles, les zéolites, les silicates, les phosphates de silicoaluminium cristallins, les phosphates d'aluminium cristallins.

Les compositions peuvent aussi être utilisées dans des systèmes catalytiques comprenant un revêtement (wash coat) à propriétés catalytiques et à base de ces compositions, sur un substrat du type par exemple monolithe métallique ou en céramique. Le revêtement peut comporter lui aussi un support du type de ceux mentionnés plus haut. Ce revêtement est obtenu par mélange de la composition avec le support de manière à former une suspension qui peut être ensuite déposée sur le substrat.

Ces systèmes catalytiques et plus particulièrement les compositions de l'invention peuvent trouver de très nombreuses applications. Ils sont ainsi particulièrement bien adaptés à, et donc utilisable dans la catalyse de diverses réactions telles que, par exemple, la déshydratation, l'hydrosulfuration, l'hydrodénitrification, la désulfuration, l'hydrodésulfuration, la déshydrohalogénation, le reformage, le reformage à la vapeur, le craquage, l'hydrocraquage, l'hydrogénation, la déshydrogénation, l'isomérisation, la dismutation, l'oxychloration, la déshydrocyclisation d'hydrocarbures ou autres composés organiques, les réactions d'oxydation et/ou de réduction, la réaction de Claus, le traitement des gaz d'échappement des moteurs à combustion interne, la démétallation, la méthanation, la shift conversion.

Dans le cas de ces utilisations en catalyse, les compositions de l'invention sont employées en combinaison avec des métaux précieux. La nature de ces métaux et les techniques d'incorporation de ceux-ci dans ces compositions sont bien connues de l'homme du métier. Par exemple, les métaux peuvent être le platine, le rhodium, le palladium ou l'iridium, ils peuvent notamment être incorporés aux compositions par imprégnation.

Parmi les utilisations citées, le traitement des gaz d'échappement des moteurs à combustion interne (catalyse post combustion automobile) constitue une application particulièrement intéressante. De ce fait, l'invention concerne aussi un procédé de traitement des gaz d'échappement des moteurs à combustion interne qui est caractérisé en ce qu'on utilise à titre de catalyseur un système catalytique tel que décrit ci-dessus ou une composition selon l'invention et telle que décrite précédemment.

Un exemple va maintenant être donné.

### EXEMPLE

Cet exemple concerne la synthèse d'un oxyde de composition ZrO₂/CeO₂/La₂O₃/Nd₂O₃ de proportions respectives en poids de 73,5/20/2,5/4.

### Matières premières utilisées :

Les concentrations C sont exprimées en oxyde.

| | | |
|---|---|---|
| Solution de Ce(NO₃)₃ | C=29,2% | d=1,718 g/cm³ |
| Solution de La(NO₃)₃ | C=29,1% | d=1,775 g/cm³ |
| Solution de Nd(NO₃)₃ | C=26,7% | d=1,682 g/cm³ |
| NH₄OH à 20% (Prolabo) | | |
| ZrOCl₂ C=24,6% en ZrO₂ | | |

### Préparation du sol de zirconium

On prépare tout d'abord une solution d'oxychlorure de zirconium C=24,6% en ZrO₂. La solution est ensuite traitée dans un autoclave à 160°C pendant 8 heures sous agitation (80 tours/min). La suspension ainsi obtenue est centrifugée à 3500 tours/min puis peptisée (la teneur en oxyde de zirconium est de 38%).

### Préparation de l'oxyde ZrO₂/CeO₂/La₂O₃/Nd₂O₃

Le sol de zirconium ainsi synthétisé est dispersé dans 350ml d'eau et on lui ajoute l'ensemble des solutions de nitrate de cérium, lanthane et néodyme sous agitation pendant 10 minutes.

Parallèlement dans un réacteur d'une contenance de 1 litre on introduit 500 ml de la solution d'ammoniaque. On ajoute à cette solution avec un débit de 10 ml/min la suspension précédemment préparée. Le pH en fin d'ajout est égal à 10,5. Le précipité est centrifugé (v=4500tr/min) puis remis en suspension dans 760 ml d'eau ammoniaquée à pH=10,5 et centrifugé de nouveau. L'opération est renouvelée trois fois. Le gâteau ainsi obtenu est remis en suspension dans 760 ml d'eau ammoniaquée et maintenu sous agitation (v=300 tours/min) 2 heures à 150°C. Après refroidissement la suspension est centrifugée puis lavée en présence d'eau ammoniaquée (pH=10,5) dans les conditions décrites précédemment. Cette opération est renouvelée trois fois puis le gâteau obtenu est remis en suspension à une concentration de 100g/l en oxyde et atomisé au Buchi^{®}. Les températures d'entrée et de sortie de l'air du Buchi^{®} sont respectivement égales à 250°C et 110°C.

Le solide séché est ensuite calciné dans un four à moufle 4h à 900°C (vitesse de montée 1 °C/min).

### Surfaces spécifiques

On donne ci-dessous les surfaces du produit obtenu après calcination à différentes températures.

4h 900°C : 77 m²/g, 10h 1000°C : 55 m²/g, 10h 1100°C : 23 m²/g, 10h 1150°C 16 m²/g, 10h 1200°C : 3,5 m²/g.

Le diagramme RX de la composition après calcination à 900°C et 1000°C montre que celle-ci est sous forme d'une solution solide correspondant à un oxyde de zirconium tétragonal.

## Revendications

1. Composition à base d'oxyde de zirconium comprenant de l'oxyde de cérium dans un rapport atomique Zr/Ce > 1, et comprenant en outre de l'oxyde de lanthane et un oxyde d'une terre rare autre que le cérium et le lanthane, **caractérisée en ce qu'**elle présente une teneur en soufre inférieure à 200 ppm, cette teneur étant exprimée en poids de sulfate (SO₄) par rapport à l'énsemble de la composition,
**en ce qu'**après calcination 6 heures à 1150°C, elle possède une surface spécifique comprise entre 10 m²/g et 15 m²/g, et **en ce qu'**après calcination 6 heures à 1000°C, elle possède une surface spécifique d'au moins 40 m²/g.

2. Composition selon la revendication 1, **caractérisée en ce qu'**après calcination 6 heures à 1200°C elle possède une surface spécifique d'au moins 3 m²/g.

3. Composition selon l'une des revendications précédentes, **caractérisée en ce qu'**après calcination 6 heures à 900°C elle possède une surface spécifique d'au moins 50 m²/g, plus particulièrement d'au moins 70 m²/g.

4. Composition selon l'une des revendications précédentes, **caractérisée en ce que** la terre rare est le néodyme.

5. Composition selon l'une des revendications précédentes, **caractérisée en ce que** les teneurs en poids en oxydes sont d'au moins 50% pour le zirconium, inférieure à 50% pour l'oxyde de cérium, d'au plus 5% pour le lanthane et d'au plus 15% pour la terre rare autre que le cérium et le lanthane.

6. Composition selon l'une des revendications précédentes, **caractérisée en ce qu'**elle présente une teneur en poids en oxyde de cérium d'au plus 40%.

7. Composition selon l'une des revendications précédentes, **caractérisée en ce qu'**elle présente une teneur en poids en oxyde de terre rare autre que le cérium et le lanthane comprise entre 3% et 10%.

8. Composition selon l'une des revendications précédentes, **caractérisée en ce qu'**elle présente une teneur en soufre inférieure à 100 ppm.

9. Composition selon l'une des revendications précédentes, **caractérisée en ce qu'**après calcination à 1000°C 6 heures elle se présente sous la forme d'une solution solide pure des oxydes de cérium, de lanthane et de l'autre terre rare dans l'oxyde de zirconium.

10. Composition selon l'une des revendications précédentes, **caractérisée en ce qu'**après calcination à 1100°C 6 heures elle se présente sous la forme d'une solution solide des oxydes de cérium, de lanthane et de l'autre terre rare dans l'oxyde de zirconium.

11. Procédé de préparation d'une composition selon l'une des revendications précédentes, **caractérisé en ce qu'**il comprend les étapes suivantes:
- on forme un mélange comprenant des composés de cérium, de lanthane et de la terre rare précitée et un sol d'un composé de zirconium;
- on met en présence ledit mélange avec une solution d'un composé basique ce par quoi on obtient un précipité;
- on chauffe en milieu aqueux ledit précipité à une température d'au moins 100°C;
- on calcine le précipité ainsi obtenu.

12. Procédé selon la revendication 11, **caractérisé en ce qu'**on utilise un sol d'un composé de zirconium qui a été obtenu par traitement thermique d'une solution aqueuse d'un oxychlorure de zirconium.

13. Procédé selon la revendication 11, **caractérisé en ce qu'**on utilise un sol d'un composé de zirconium qui a été obtenu par attaque d'un hydroxyde ou d'un carbonate de zirconium par de l'acide nitrique dans un rapport molaire NO₃⁻/Zr compris entre 1,7 et 2,3 dans le cas d'un hydroxyde et 1,7 et 2 dans le cas d'un carbonate.

14. Procédé selon l'une des revendications 11 à 13, **caractérisé en ce que** le chauffage du précipité est réalisé à pH basique.

15. Procédé selon l'une des revendications 11 à 14, **caractérisé en ce que** la mise en présence du mélange précité avec la solution d'un composé basique se fait en introduisant ledit mélange dans cette solution.

16. Système catalytique, **caractérisé en ce qu'**il comprend une composition selon l'une des revendications 1 à 10.

17. Procédé de traitement des gaz d'échappement des moteurs à combustion interne, **caractérisé en ce qu'**on utilise à titre de catalyseur un système catalytique selon la revendication 16 ou une composition selon l'une des revendications 1 à 10.

## Patentansprüche

1. Zusammensetzung auf Basis von Zirconiumoxid, das Ceroxid in einem Zr/Ce-Atomverhältnis > 1 umfasst und außerdem Lanthanoxid und ein Oxid eines Seltenerdmetalls, das von Cer und Lanthan verschieden ist, umfasst, **dadurch gekennzeichnet, dass** sie einen Schwefelgehalt von weniger als 200 ppm aufweist, wobei dieser Gehalt als Gewicht von Sulfat (SO₄), bezogen auf die Gesamtzusammensetzung, ausgedrückt ist,
dass sie nach 6 Stunden Calcinierung bei 1150°C eine spezifische Oberfläche von zwischen 10 m²/g und 15 m²/g aufweist,
und dass sie nach 6 Stunden Calcinierung bei 1000°C eine spezifische Oberfläche von mindestens 40 m²/g aufweist.

2. Zusammensetzung nach Anspruch 1, **dadurch gekennzeichnet, dass** sie nach 6 Stunden Calcinierung bei 1200°C eine spezifische Oberfläche von mindestens 3 m²/g aufweist.

3. Zusammensetzung nach einem der vorhergehenden Ansprüche, **dadurch gekennzeichnet, dass** sie nach 6 Stunden Calcinierung bei 900°C eine spezifische Oberfläche von mindestens 50 m²/g, spezieller mindestens 70 m²/g, aufweist.

4. Zusammensetzung nach einem der vorhergehenden Ansprüche, **dadurch gekennzeichnet, dass** es sich bei dem Seltenerdmetall um Neodym handelt.

5. Zusammensetzung nach einem der vorhergehenden Ansprüche, **dadurch gekennzeichnet, dass** die Gewichtsgehalte an Oxiden mindestens 50% für Zirconium, weniger als 50% für Ceroxid, höchstens 5% für Lanthan und höchstens 15% für das Seltenerdmetall, das von Cer und Lanthan verschieden ist, betragen.

6. Zusammensetzung nach einem der vorhergehenden Ansprüche, **dadurch gekennzeichnet, dass** sie einen Gewichtsgehalt an Ceroxid von höchstens 40% aufweist.

7. Zusammensetzung nach einem der vorhergehenden Ansprüche, **dadurch gekennzeichnet, dass** sie einen Gewichtsgehalt an Oxid von Seltenerdmetall, das von Cer und Lanthan verschieden ist, zwischen 3% und 10% aufweist.

8. Zusammensetzung nach einem der vorhergehenden Ansprüche, **dadurch gekennzeichnet, dass** sie einen Schwefelgehalt von weniger als 100 ppm aufweist.

9. Zusammensetzung nach einem der vorhergehenden Ansprüche, **dadurch gekennzeichnet, dass** sie nach 6 Stunden Calcinierung bei 1000°C in Form einer reinen festen Lösung der Oxide von Cer, Lanthan und dem anderen Seltenerdmetall in dem Zirconiumoxid vorliegt.

10. Zusammensetzung nach einem der vorhergehenden Ansprüche, **dadurch gekennzeichnet, dass** sie nach 6 Stunden Calcinierung bei 1100°C in Form einer festen Lösung der Oxide von Cer, Lanthan und dem anderen Seltenerdmetall in dem Zirconiumoxid vorliegt.

11. Verfahren zur Herstellung einer Zusammensetzung nach einem der vorhergehenden Ansprüche, **dadurch gekennzeichnet, dass** es folgende Schritte umfasst:
- man bildet eine Mischung, die Verbindungen von Cer, Lanthan und dem oben genannten Seltenerdmetall und ein Sol einer Zirconiumverbindung umfasst;
- man gibt die Mischung mit einer Lösung einer basischen Verbindung zusammen, wodurch man einen Niederschlag erhält;
- man erhitzt den Niederschlag in wässrigem Medium auf eine Temperatur von mindestens 100°C;
- man calciniert den so erhaltenen Niederschlag.

12. Verfahren nach Anspruch 11, **dadurch gekennzeichnet, dass** man ein Sol einer Zirconiumverbindung verwendet, das durch thermische Behandlung einer wässrigen Lösung eines Zirconiumoxidchlorids erhalten wurde.

13. Verfahren nach Anspruch 11, **dadurch gekennzeichnet, dass** man ein Sol einer Zirconiumverbindung verwendet, das durch Einwirkung von Salpetersäure auf ein Hydroxid oder Carbonat von Zirconium in einem NO₃⁻/Zr-Molverhältnis zwischen 1,7 und 2,3 im Fall eines Hydroxids und 1,7 und 2 im Fall eines Carbonats erhalten wurde.

14. Verfahren nach einem der Ansprüche 11 bis 13, **dadurch gekennzeichnet, dass** das Erhitzen des Niederschlags bei basischem pH-Wert durchgeführt wird.

15. Verfahren nach einem der Ansprüche 11 bis 14, **dadurch gekennzeichnet, dass** das Zusammengeben der oben genannten Mischung mit der Lösung einer basischen Verbindung durch Eintragen der Mischung in diese Lösung erfolgt.

16. Katalytisches System, **dadurch gekennzeichnet, dass** es eine Zusammensetzung nach einem der Ansprüche 1 bis 10 umfasst.

17. Verfahren zur Behandlung von Abgasen von Verbrennungsmotoren, **dadurch gekennzeichnet, dass** man als Katalysator ein katalytisches System nach Anspruch 16 oder eine Zusammensetzung nach einem der Ansprüche 1 bis 10 verwendet.

## Claims

1. Composition based on zirconium oxide comprising cerium oxide in an atomic ratio Zr/Ce > 1, and in addition comprising lanthanum oxide and an oxide of a rare-earth metal other than cerium and lanthanum, **characterized in that** it has a sulfur content of less than 200 ppm, said content being expressed as weight of sulfate (SO₄) relative to the whole composition,
**in that** after calcination for 6 hours at 1150°C it has a specific surface area which is comprised between 10 m²/g and 15 m²/g,
and **in that** after calcination 6 hours at 1000°C, it has a specific surface of at least 40 m²/g.

2. Composition according to Claim 1, **characterized in that** after calcination for 6 hours at 1200°C it has a specific surface area of at least 3 m²/g.

3. Composition according to one of the preceding claims, **characterized in that** after calcination for 6 hours at 900°C it has a specific surface area of at least 50 m²/g, and more particularly of at least 70 m²/g.

4. Composition according to one of the preceding claims, **characterized in that** the rare-earth metal is neodymium.

5. Composition according to one of the preceding claims, **characterized in that** the weight contents of oxides are at least 50% for zirconium, less than 50% for the oxide of cerium, 5% at most for lanthanum and not more than 15% for the rare-earth metal other than cerium and lanthanum.

6. Composition according to one of the preceding claims, **characterized in that** it has a weight content of cerium oxide of not more than 40%.

7. Composition according to one of the preceding claims, **characterized in that** it has a weight content of oxide of a rare-earth metal other than cerium and lanthanum of between 3% and 10%.

8. Composition according to one of the preceding claims, **characterized in that** it has a sulfur content of less than 100 ppm.

9. Composition according to one of the preceding claims, **characterized in that**, after calcination at 1000°C for 6 hours, it is in the form of a pure solid solution of oxides of cerium, of lanthanum and of the other rare-earth metal in zirconium oxide.

10. Composition according to one of the preceding claims, **characterized in that**, after calcination at 1100°C for 6 hours, it is in the form of a solid solution of oxides of cerium, of lanthanum and of the other rare-earth metal in zirconium oxide.

11. Method of preparation of a composition according to one of the preceding claims, **characterized in that** it comprises the following steps:
- a mixture is prepared comprising compounds of cerium, of lanthanum and of the aforementioned rare-earth metal and a sol of a zirconium compound;
- said mixture is brought into contact with a solution of a basic compound whereby a precipitate is obtained;
- said precipitate is heated in an aqueous medium at a temperature of at least 100°C;
- the precipitate thus obtained is calcined.

12. Method according to Claim 11, **characterized in that** it uses a sol of a zirconium compound that was obtained by heat treatment of an aqueous solution of a zirconium oxychloride.

13. Method according to Claim 11, **characterized in that** it uses a sol of a zirconium compound that was obtained by the action of nitric acid on a hydroxide or carbonate of zirconium in a mole ratio NO₃⁻/Zr between 1.7 and 2.3 in the case of a hydroxide and 1.7 and 2 in the case of a carbonate.

14. Method according to one of Claims 11 to 13, **characterized in that** heating of the precipitate is performed at basic pH.

15. Method according to one of Claims 11 to 14, **characterized in that** the aforementioned mixture is brought into contact with the solution of a basic compound by introducing said mixture into this solution.

16. Catalytic system, **characterized in that** it comprises a composition according to one of Claims 1 to 10.

17. Method of treatment of the exhaust gases of internal combustion engines, **characterized in that** a catalytic system according to Claim 16 or a composition according to one of Claims 1 to 10 is used as the catalyst.
